# EUROPEAN PATENT APPLICATION

(11) **EP 4 645 942 A1**
(43) Date of publication of application: **05.11.2025**
(21) Application number: 24747451.3
(22) Date of filing: 25.01.2024
(51) Int. Cl.: H04W 24/10, H04W 8/24, H04B 17/345, H04W 88/06

(54) **METHOD AND DEVICE FOR REPORTING IDC PROBLEM IN MUSIM ENVIRONMENT**

(30) Priority: 27.01.2023 KR 20230010559
(71) Applicant: Samsung Electronics Co., Ltd., Suwon-si, Gyeonggi-do 16677 (KR)
(72) Inventor: KIM, Sangbum, Suwon-si, Gyeonggi-do 16677 (KR)
(74) Representative: Gulde & Partner
(86) International application number: PCT/KR2024/001163
(87) International publication number: WO 2024/158216

(57) **Abstract**

The present disclosure relates to a method performed by a terminal supporting multiple SIMs in a wireless communication system, the method comprising the steps of: identifying a frequency band affected by a second network related to a second SIM; and transmitting, to a first network related to a first SIM, a terminal assistance information message including information on the frequency band affected by the second network.

## Description

### [Technical Field]

The disclosure relates to operations of a UE and a base station in a mobile communication system and, more particularly, to a method for reporting an in-device coexistence (IDC) problem in a communication system and a device for performing the same.

### [Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

A UE of a communication system to which the disclosure is applicable includes various communication modules. The modules may transmit and receive necessary data through antennas connected thereto. Different communication systems use different frequency bands. However, when the communication systems use adjacent bands, interference may occur between the communication modules. Therefore, a method and a device for alleviating the interference are required.

### [Disclosure of Invention]

### [Technical Problem]

The disclosure is to solve the above problem, and an aspect of the disclosure is to provide a method and a device for controlling interference that may occur between communication modules in a wireless communication system. In particular, the disclosure proposes a method and a device for solving an interference problem in a multi-universal subscriber identity module (MUSIM) environment.

The technical subjects pursued in embodiments of the disclosure may not be limited to the above-mentioned technical subjects, and other technical subjects which are not mentioned herein may be clearly understood from the following description by those skilled in the art to which the disclosure pertains.

### [Solution to Problem]

In accordance with an aspect of the disclosure, a method performed by a terminal supporting a plurality of SIMs (multi-universal subscriber identity modules: MUIM) in a wireless communication system includes: receiving configuration to transmit MUSIM-related UE assistance information from a first network related to a first SIM; identifying a frequency band affected by a second network related to a second SIM; and transmitting a UE assistance information message including information about the frequency band affected by the second network to the first network related to the first SIM.

In accordance with an aspect of the disclosure, a method performed by a first network related to a first SIM in a wireless communication system includes: performing configuration to transmit MUSIM-related UE assistance information to a terminal supporting a plurality of SIMs (multi-universal subscriber identity module: MUIM); and receiving a UE assistance information message including information about a frequency band affected by a second network related to a second SIM from the terminal.

In accordance with an aspect of the disclosure, a terminal supporting a plurality of SIMs (multi-universal subscriber identity modules: MUIM) in a wireless communication system includes a transceiver configured to transmit and receive a signal and a controller, wherein the controller is configured transmit MUSIM-related UE assistance information from a first network related to a first SIM, identifies a frequency band affected by a second network related to a second SIM, and transmits a UE assistance information message including information about the frequency band affected by the second network to the first network related to the first SIM.

In accordance with an aspect of the disclosure, a first network related to a first SIM in a wireless communication system includes a transceiver configured to transmit and receive a signal and a controller, wherein the controller performs configuration to transmit MUSIM-related UE assistance information to a terminal supporting a plurality of SIMs (multi-universal subscriber identity module: MUIM), and receive a UE assistance information message including information about a frequency band affected by a second network related to a second SIM from the terminal.

### [Advantageous Effects of Invention]

According to an embodiment of the disclosure, it is possible to efficiently solve an IDC problem in a MUSIM environment. Specifically, when a MUSIM UE is provided with services from two or more networks, the UE may smoothly perform a standby-mode or connected-mode operation from the two or more networks.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

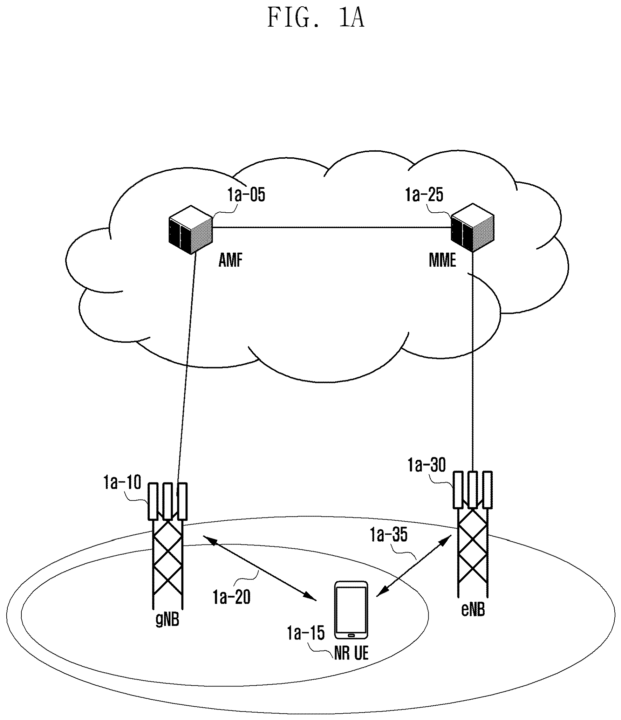

FIG. 1A illustrates a structure of a next-generation mobile communication system according to an embodiment of the disclosure.

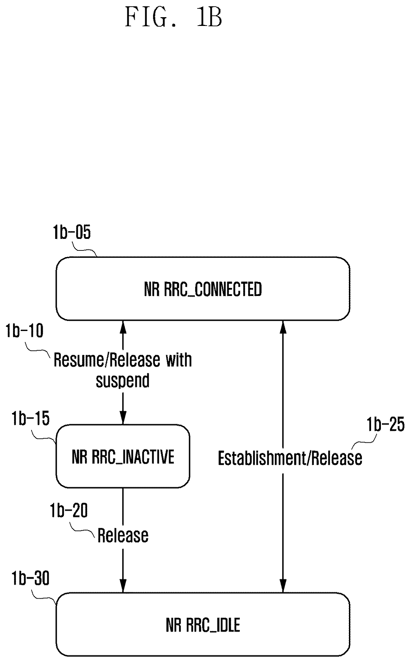

FIG. 1b illustrates a transition between wireless connection states in a next-generation mobile communication system according to an embodiment of the disclosure;

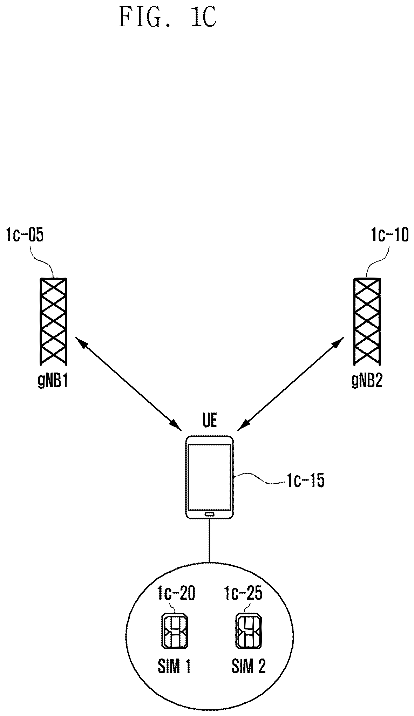

FIG. 1c illustrates a UE supporting a plurality of subscriber identity modules (SIMs) according to an embodiment of the disclosure;

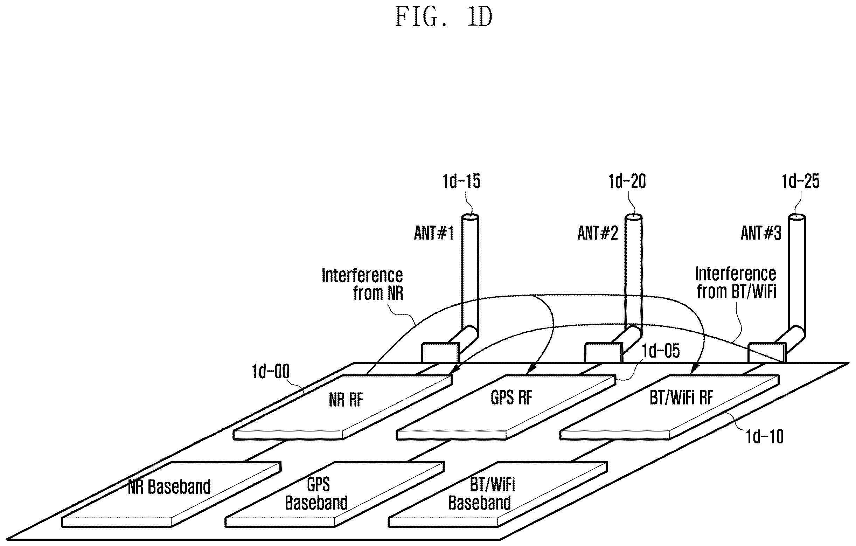

FIG. 1d illustrates in-device coexistence (IDC) according to an embodiment of the disclosure;

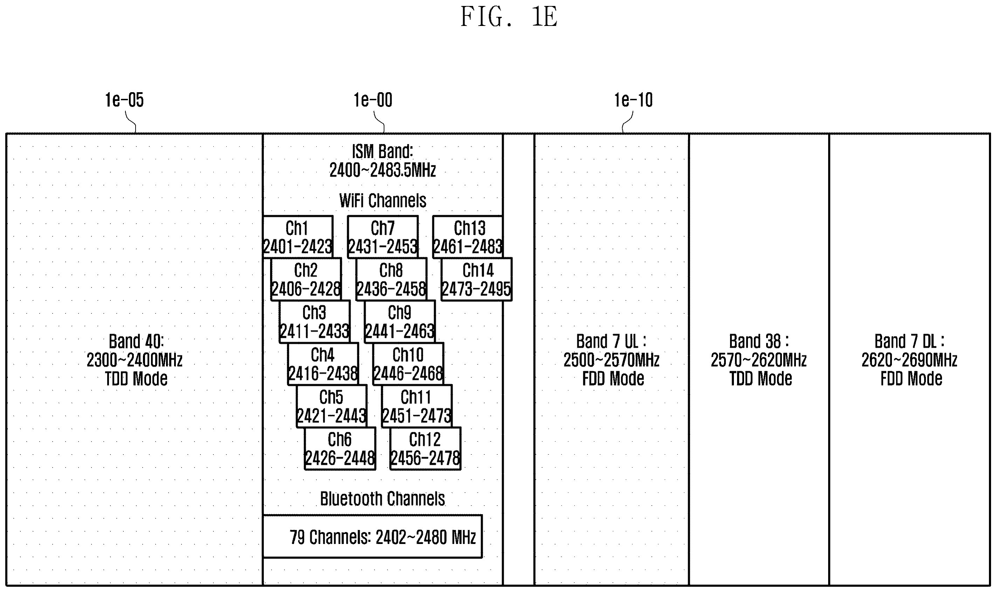

FIG. 1e schematically illustrates a frequency band adjacent to an ISM band among frequencies used for 3GPP mobile communication according to an embodiment of the disclosure;

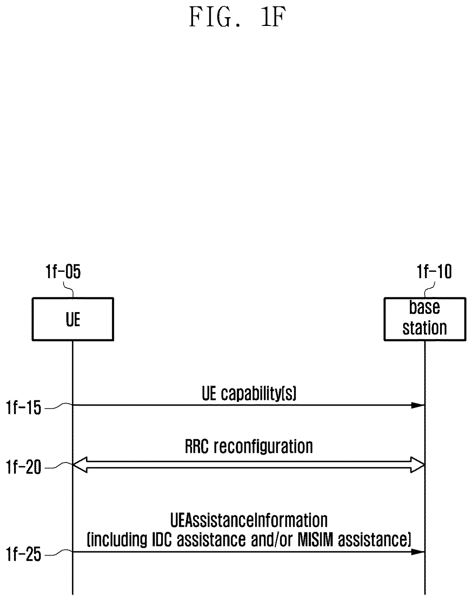

FIG. 1f is a flowchart illustrating a process for reporting predetermined information indicating a UE preference to a base station in a mobile communication system according to an embodiment of the disclosure;

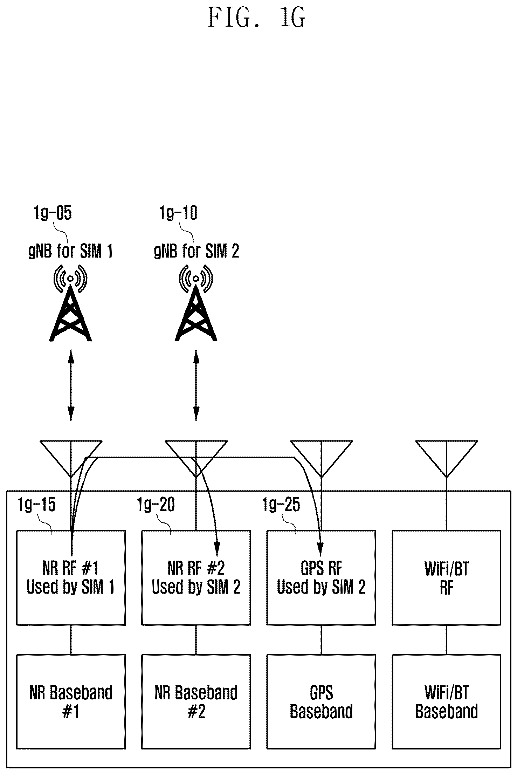

FIG. 1g illustrates a scenario in which a UE simultaneously communicating with a plurality SIMs experiences an IDC problem according to an embodiment of the disclosure;

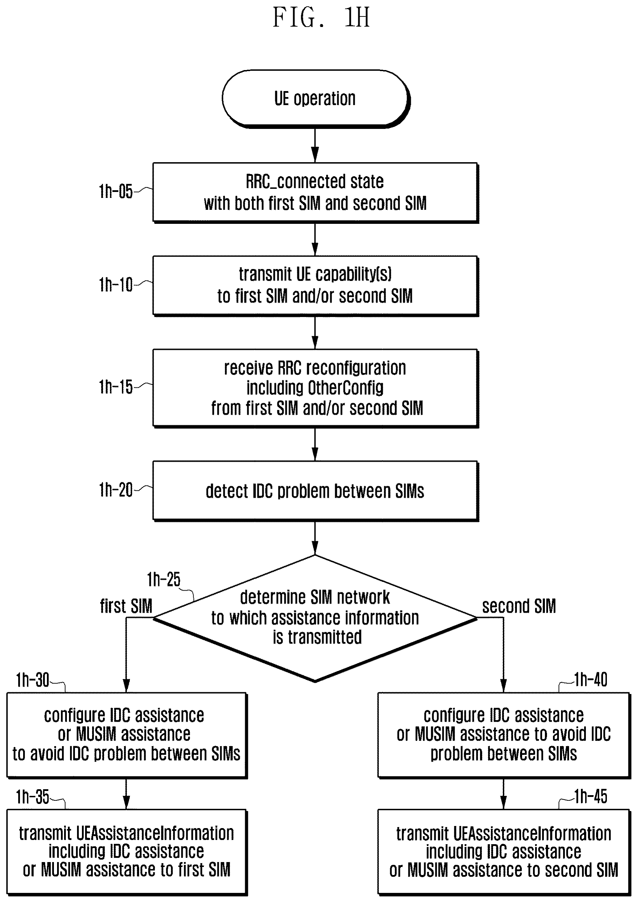

FIG. 1h is a flowchart of the operation of a UE illustrating a process for solving an IDC problem of a UE simultaneously communicating with a plurality of SIMs according to an embodiment of the disclosure;

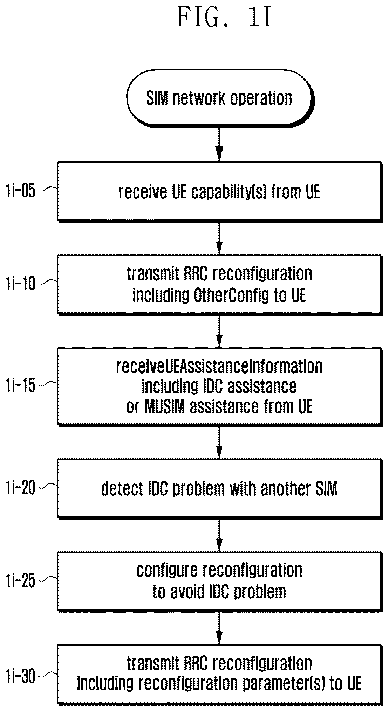

FIG. 1i is a flowchart of the operation of a base station illustrating a process for solving an IDC problem of a UE simultaneously communicating with a plurality of SIMs according to an embodiment of the disclosure;

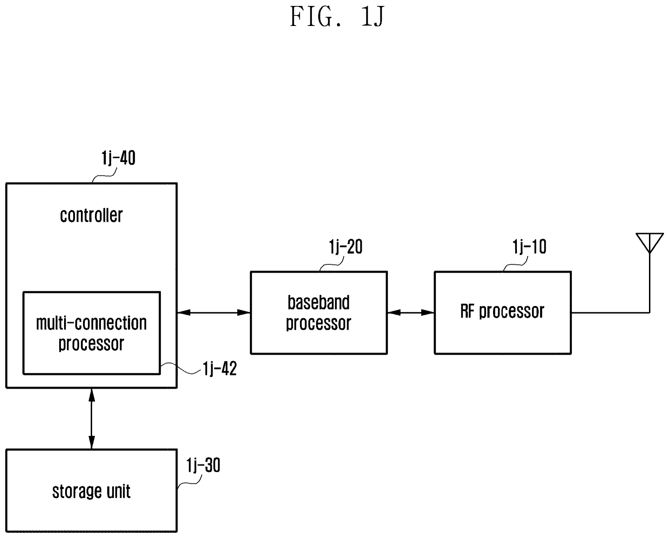

FIG. 1j is a block diagram illustrating an internal structure of a UE according to an embodiment of the disclosure.

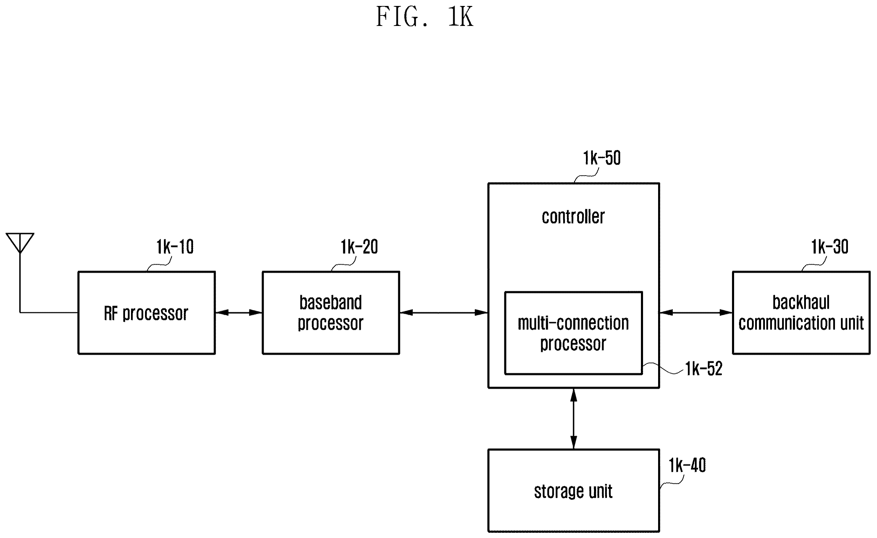

FIG. 1k is a block diagram illustrating a structure of a base station according to an embodiment of the disclosure.

### [Mode for the Invention]

In describing embodiments in the specification, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. In the respective drawings, the same or corresponding elements are assigned the same reference numerals.

The advantages and features of the present disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

In describing the disclosure below, a detailed description of known functions or configurations will be omitted when it is determined that the description may make the subject matter of the disclosure unnecessarily unclear. Hereinafter, embodiments of the disclosure will be described with reference to the accompanying drawings.

FIG. 1A illustrates a structure of a next-generation mobile communication system according to an embodiment of the disclosure.

Referring to FIG. 1A, as illustrated therein, a radio access network of a next-generation mobile communication system (new radio, NR) includes a next-generation base station (new radio node B, hereinafter gNB) 1a-10 and an access and mobility management function (AMF) 1a-05. A user equipment (new radio user equipment, hereinafter NR UE or NR terminal) 1a-15 accesses an external network via the gNB 1a-10 and the AMF 1a-05.

In FIG. 1A, the gNB corresponds to an evolved node B (eNB) of a conventional LTE system. The gNB may be connected to the NR UE through a radio channel and provide outstanding services as compared to a conventional node B.

In the next-generation mobile communication system, since all user traffic is serviced through a shared channel, a device that collects state information, such as buffer statuses, available transmit power states, and channel states of UEs, and performs scheduling accordingly is required, and the gNB 1a-10 serves as the device. In general, one gNB controls multiple cells. In order to implement ultrahigh-speed data transfer beyond the current LTE, the next-generation mobile communication system may provide a wider bandwidth than the existing maximum bandwidth, may employ an orthogonal frequency division multiplexing (hereinafter referred to as OFDM) as a radio access technology, and may additionally integrate a beamforming technology therewith. Furthermore, the next-generation mobile communication system employs an adaptive modulation & coding (hereinafter referred to as AMC) scheme for determining a modulation scheme and a channel coding rate according to a channel state of a UE.

The AMF 1a-05 performs functions such as mobility support, bearer configuration, and QoS configuration. The AMF is a device responsible for various control functions as well as a mobility management function for a UE, and isa connected to multiple base stations. In addition, the next-generation mobile communication system may interwork with the existing LTE system, and the AMF is connected to an MME 1a-25 via a network interface. The MME is connected to an eNB 1a-30 that is an existing base station. A UE supporting LTE-NR dual connectivity may transmit/receive data while maintaining connections to both the gNB and the eNB.

FIG. 1b illustrates a transition between wireless connection states in a next-generation mobile communication system according to an embodiment of the disclosure.

The next-generation mobile communication system may have three wireless connection states (RRC states). A connected mode (RRC_CONNECTED) 1b-05 is a wireless connection state in which a UE may transmit and receive data. A standby mode (RRC_IDLE) 1b-30 is a wireless connection state in which a UE monitors whether paging is transmitted to the UE. These two modes are wireless connection states that are also applied to an existing LTE system, and a detailed technology is the same as that of the existing LTE system.

In the next-generation mobile communication system, a new inactive (RRC_INACTIVE) wireless connection state 1b-15 is defined. In the wireless connection state, UE context is maintained in a base station and a UE, and RAN-based paging is supported. Characteristics of the new wireless connection state are listed as follows.
- C-ell re-selection mobility;
- CN - NR RAN connection (both C/U-planes) has been established for UE;
- The UE AS context is stored in at least one gNB and the UE;
- Paging is initiated by NR RAN;
- RAN-based notification area is managed by NR RAN;
- NR RAN knows the RAN-based notification area which the UE belongs to;

The new inactive wireless connection state may transition to the connected mode or the standby mode according to a specific process. The inactive mode transitions to the connected mode according to a resume process, and the connected mode transitions to the inactive mode according to a release process including suspend configuration information (1b-10). The process includes one or more operations, in which one or more RRC messages are transmitted and received between a UE and a base station. Further, the inactive mode may transition to the standby mode through a release process after a resume process (1b-20). The transition between the connected mode and the standby mode follows the existing LTE technology. That is, the transition between the modes is performed through an establishment or release process (1b-25).

FIG. 1c illustrates a UE supporting a plurality of subscriber identity modules (SIMs) according to an embodiment of the disclosure.

A SIM is a device that stores information about a mobile communication subscriber, and a UE may register with and access a network provided by a service provider to which the subscriber has subscribed by using the information stored in the device. A multi-SIM (MUSIM) UE 1c-15 according to an embodiment of the disclosure is a UE supporting two or more SIMs 1c-20 and 1c-25. The multi-SIM UE may operate in a first mode (hereinafter, "Dual SIM Dual Standby (DSDS) mode") or a second mode (hereinafter, "Dual SIM Dual Active (DSDA) mode"). The DSDS mode and the DSDA mode may be defined as follows.
- DSDS (Dual SIM Dual Standby): both SIMs can be used for idle-mode network connection, but when a radio connection (1c-05) is active the second connection (1c-10) is disabled. As in the passive case, the SIMs in a DSDS device share a single transceiver. Through time multiplexing two radio connections are maintained in idle mode. When in-call on network for one SIM it is no longer possible to maintain radio connection to the network of the second SIM, hence that connection is unavailable for the duration of the call. Registration to the second network is maintained
- DSDA (Dual SIM Dual Active): both SIMs can be used in both idle and connected modes. Each SIM has a dedicated transceiver, meaning that there are no interdependencies on idle or connected mode operation at the modem level

When the UE supporting the plurality of SIMs has one RF chain (or transceiver), a collision may occur when transmitting and receiving data in a connected mode with a first network corresponding to a first SIM and receiving paging from a second network corresponding to a second SIM. Therefore, in this case, it may be difficult to monitor paging transmitted from the second network corresponding to the second SIM or perform other standby-mode operations (e.g., receiving system information or PWS information and a TAU). The TAU is a process of re-registering a paging area periodically or when the UE reselects a cell with a different TA, and requires connection with a network. Here, the UE requires a transmission and reception process with the network. Therefore, the UE may not perform a TAU operation depending on transmissions and receptions via other networks. Here, an RF chain is a term commonly used in the field of communications, and refers to a set of a series of RF modules (antennas, amplifiers, converters/decoders, and filters) required for data transmission and reception.

When the UE supports two RF chains, the UE may receive services from the two networks corresponding to the different SIMs simultaneously without the foregoing problem. However, when the UE supporting the two RF chains uses both of the two RF chains as CA/DC is configured in a network corresponding to one SIM, a method for smoothly performing a standby-mode or connected-mode operation in the other network is still required. Therefore, to solve this problem, a plurality of solutions has been introduced in the next-generation mobile communication system.

For example, when the patterns of paging from the respective networks to be monitored entirely or partly overlap, making it difficult to monitor paging from any one of the networks, the UE may request a change of a UE ID from the network, thereby changing a paging pattern derived from the UE ID. While performing data transmission and reception operations in a connected mode with one network, the UE may needs to monitor paging periodically transmitted from the other network. Here, the network of the connected mode may be requested to configure a predetermined periodic or aperiodic gap for monitoring the paging. When it is needed to switch to a connected mode with the other network through the paging received from the other network, the existing network of the connected mode may request a disconnected mode. Here, the paging may include a predetermined indicator indicating a predetermined service (e.g., a voice call). To request the foregoing configuration of the gap or disconnected mode, the UE may transmit a UEAssistanceInformation message including related information (musim-Assistance) to a base station.

The standby-mode operation refers to monitoring and reception of paging, reception of system information, reception of public warning system (PWS) information, a tracking area update (TAU), and the like. The connected-mode operation means that the UE performs data transmission and reception operations with the base station.

FIG. 1d illustrates an in-device coexistence (IDC) technology according to an embodiment of the disclosure.

In-device coexistence (IDC) is a technology for minimizing interference between a plurality of communication modules in a device. Recent UEs have various functions, and have various communication modules to support the functions. In addition to an NR communication module 1d-00, there may be a GPS module 1d-05 and a short-range communication module 1d-10, such as Bluetooth and wireless LAN modules. These modules may transmit and receive necessary data through respectively connected antennas 1d-15, 1d-20, and 1d-25.

Communication systems use different frequency bands. However, when the communication systems use adjacent bands, interference may occur between the communication modules, because it is impossible to ideally separate signals transmitted and received between bands. Furthermore, each communication module and an antenna connected thereto are included in one UE device, and thus are positioned very close to each other. Therefore, significant interference may occur therebetween.

Therefore, to alleviate the interference, it is necessary to control transmission power between the communication modules. For example, when the short-range communication module 1d-10, such as Bluetooth or wireless LAN modules, attempts to receive data in an NR uplink, a transmission signal of the NR communication module 1d-00 may interfere with the short-range communication module. In addition, an NR uplink signal may interfere with other NR frequencies or frequencies of other mobile communication systems. To alleviate the interference, the maximum uplink transmission power of the NR communication module may be limited to control the amount of interference. Alternatively, the operation of the NR communication module may be temporarily suspended to eliminate the amount of interference power that affects the short-range communication module. On the contrary, the short-range communication module 1d-10 may interfere with a reception signal of the NR communication module 1d-00 in an NR downlink.

FIG. 1e schematically illustrates a frequency band adjacent to an ISM band among frequencies used for 3GPP mobile communication according to an embodiment of the disclosure.

When a mobile communication cell uses Band 40 1e-05, interference becomes severe when a wireless LAN uses channel 1, and when the mobile communication cell uses Band 7 UL 1e-10, interference becomes severe when the wireless LAN channel uses channel 13 or 14. Therefore, a method for appropriately avoiding the interference is required when the interference occurs.

In a conventional next-generation mobile communication system, a UE may report, to a base station, a UEAssistanceInformation message including information (affectedCarrierFreqList field) about an NR frequency that gives an impact or is affected by an IDC problem, information (affectedCarrierFreqCombList field) about an NR frequency that provides IDC interference due to inter-modulation distortion and harmonics of an uplink NR signal configured with carrier aggregation (CA), and information (IDC-Assistance) required to avoid the IDC problem, such as information about heterogeneous communication modules including GPS, BT, and WLAN modules that are affected by the interference, depending on a configuration of the base station.

In a MUSIM scenario, a UE in a DSDA state with two SIM networks may perform data transmission and reception operations by assigning one RF chain to each SIM network. Here, IDC interference may occur between RF chains assigned to the respective SIM networks. The disclosure proposes a method for avoiding IDC interference between RF chains assigned to respective SIM networks in a MUSIM scenario.

FIG. 1f is a flowchart illustrating a process for reporting predetermined information indicating a UE preference to a base station in a mobile communication system according to an embodiment of the disclosure.

In an NR mobile communication system, a UE may report a preference of the UE to a base station compared to a current configuration. Examples are as follows.
- Preferred delay budget
- Preference for power consumption reduction (UE power preference)
- Preference for overheating reduction (overheating assistance)
- IDC problem report and preferred solution (IDC assistance)
- MUSIM problem report and preferred solution (MUSIM assistance)

Upon receiving the foregoing preferences, the base station may trigger reconfiguration in response. For example, when receiving preferences for power consumption reduction, delay reduction, and overheating reduction, the base station may perform reconfiguration by reducing or increasing a DRX cycle.

The UE may report a preferred delay budget and a preference for overheating reduction to the base station. In addition, the UE may report a preferred reconfiguration item for overheating or power consumption reduction in more detail. Here, the UE may indicate the maximum number of SCells, an aggregated frequency bandwidth (BW), and the maximum number of MIMO layers preferred by the UE.

As mentioned above, the UE may report the IDC problem or the MUSIM problem to a network to avoid the IDC problem or the MUSIM problem, and may report solution information for avoiding the problem.

A procedure for reporting the foregoing preferences is as follows.

In operation 1f-15, the UE 1f-05 may report a capability to report each of the preferences to the base station 1f-10.

In operation 1f-20, the base station 1f-10 may configure the UE to report each of the preferences to the base station at a necessary time, based on the ability information.

In operation 1f-25, the UE 1f-05 may report a preference of the UE to the base station at a necessary time by using a UEAssistanceInformation message. For example, when the UE wants to avoid the IDC problem and the MUSIM problem, the UE may transmit the UEAssistanceInformation message including IDC-Assistance and MUSIM-Assistance to the base station.

IDC-Assistance information described in TS38.331 is as follows:

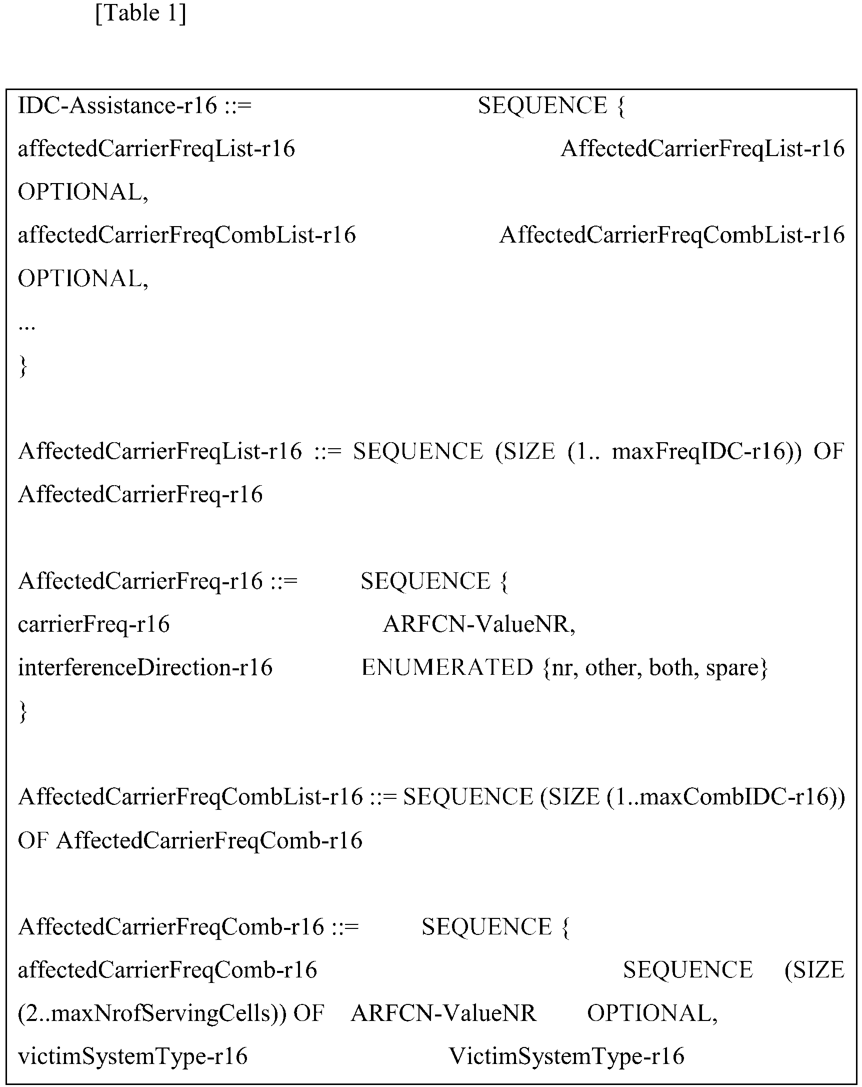

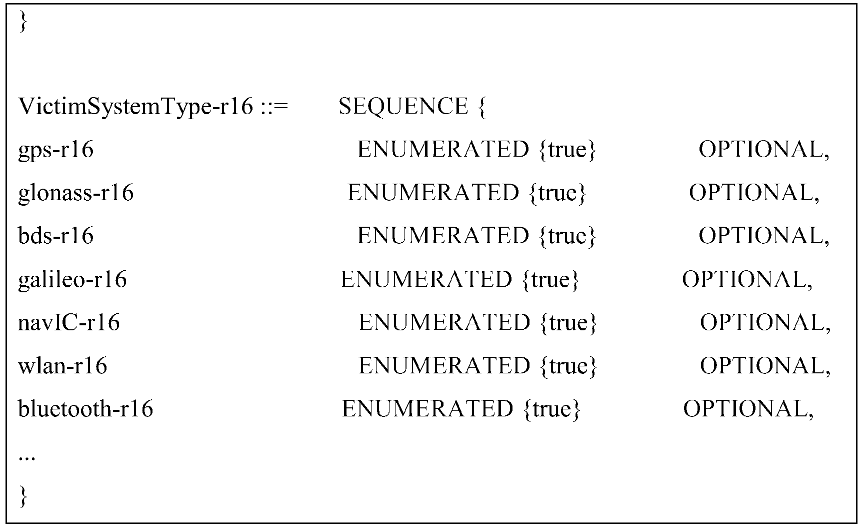

An interferenceDirection field included in an AffectedCarrierFreq IE is used to indicate a direction in which IDC interference is exerted. For example, when the field has a value of nr, the field indicates that a system victimized by the IDC interference is an NR system. When the field has a value of other, the field indicates that the system victimized by the IDC interference is a system other than the NR system.

A victimSystemType field included in an AffectedCarrierFreqComb IE is used to indicate the type of a system victimized by IDC interference generated by the NR system with uplink CA configured. For example, a value of wlan indicates a WLAN system, and a value of bluetooth indicates a Bluetooth system.

Therefore, the UE may not indicate IDC interference between NR frequencies by using existing IDC Assistance.

MUSIM-Assistance information described in TS38.331 is as follows.

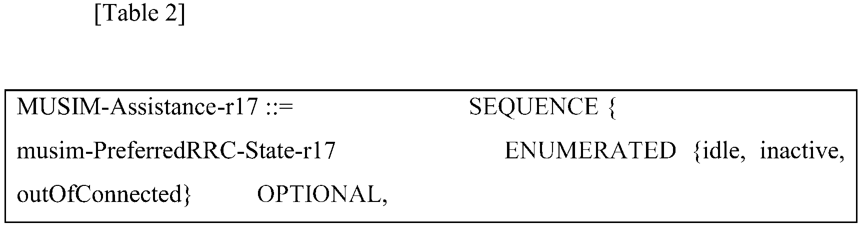

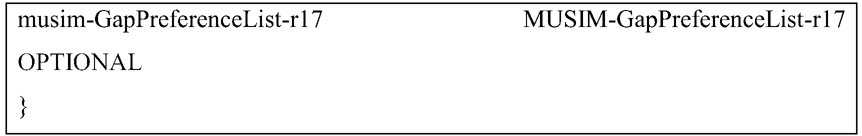

A musim-PreferredRRC-State field is used to indicate an RRC state preferred by the UE when a current connection mode is released to resolve the MUSIM problem.

A musim-GapPreferenceList field is used to report gap configuration information preferred by the UE to resolve the MUSIM problem.

FIG. 1g illustrates a scenario in which a UE simultaneously communicating with a plurality SIMs experiences an IDC problem according to an embodiment of the disclosure.

When a UE is simultaneously connected to two SIM networks and performs data transmission and reception operations, IDC interference may occur between RF chains corresponding to the respective SIM networks. For example, an uplink signal transmitted by an RF chain 1g-15 corresponding to a first SIM network 1g-05 may be received by an RF chain 1g-20 corresponding to a second SIM network 1g-10. Alternatively, the uplink signal may affect another wireless system (e.g., a GPS 1g-25) operating to support the second SIM network. That is, a transmission signal of the first SIM network may cause IDC interference to the second SIM network.

This embodiment proposes a method in which the UE reports IDC assistance or MUSIM assistance with predetermined new information added thereto to a predetermined SIM network to avoid the IDC interference occurring between the RF chains corresponding to the respective SIM networks. The SIM networks are an NR or EUTRA system.

Since the UE is connected to the two SIM networks, the UE may transmit UEAssistanceInformation including IDC assistance or MUSIM assistance to either one or both of the SIM networks. Accordingly, when the uplink signal transmitted by the RF chain corresponding to the first SIM network causes IDC interference to a downlink of the RF chain corresponding to the second SIM network or a downlink of the other wireless system (e.g., the GPS) operating to support the second SIM network, the following scenarios may be considered to solve the IDC problem. The GPS below represents a heterogeneous system excluding an NR or EUTRA system. That is, a WLAN or Bluetooth system may be considered instead of the GPS in this embodiment.
- Scenario 1: UE transmits to SIM1, IDC assistance to avoid IDC problem toward GPS
- Scenario 2: UE transmits to SIM1, IDC assistance to avoid IDC problem toward NR RF #2 (SIM2)
- Scenario 3: UE transmits to SIM1, MUSIM assistance to avoid IDC problem toward GPS
- Scenario 4: UE transmits to SIM1, MUSIM assistance to avoid IDC problem toward NR RF #2 (SIM2)
- Scenario 5: UE transmits to SIM2, IDC assistance to avoid IDC problem toward GPS
   - Scenario 6: UE transmits to SIM2, IDC assistance to avoid IDC problem from NR RF #1 (SIM1)
   - Scenario 7: UE transmits to SIM2, MUSIM assistance to avoid IDC problem toward GPS
   - Scenario 8: UE transmits to SIM2, MUSIM assistance to avoid IDC problem from NR RF #1 (SIM1)

In each scenario, new information may be introduced into IDC assistance or MUSIM assistance to solve the IDC problem.

In scenario 1, the UE may report to the first SIM network that the first SIM network is causing IDC interference to the GPS by using existing IDC assistance signaling even though the GPS is used for the other SIM network. The IDC assistance includes information about the IDC interference to the GPS.

For example, the UE may report, to the first SIM network, IDC-Assistance information in which an interferenceDirection field is configured to a value of other or a victimSystemType field is configured to a value of gps together with frequency information about the first SIM network causing the IDC interference. Here, a new indicator indicating that the signal of the first SIM network is causing the interference to the GPS operating for the other SIM network may be included in the IDC assistance to notify the first SIM network of the situation. Upon receiving the information, the first SIM network may release a serving frequency thereof causing the IDC interference.

In scenario 2, the UE reports to the first SIM network that the signal of the first SIM network is causing IDC interference to the second SIM network by using IDC assistance signaling. The following options may be considered for the report.
- Option 1: A new cause value (i.e., nrForOtherSIM) for indicating that the signal of the first SIM network is causing the IDC interference to the second SIM network is added to a victimSystemType field.
- Option 2: Frequency information (e.g., an ARFCN-ValueNR or ARFCN-ValueEUTRA list) about a victim SIM is newly added to an IDC-Assistance IE. Frequency range information about the victim SIM affected by the IDC interference may be added. The frequency range may be indicated by start frequency/frequency band, center frequency/frequency band, or start frequency/end frequency information. PLMN information about the victim SIM may also be included in the IDC-Assistance IE.
- Option 3: A new indicator indicating that a frequency indicated by carrierFreq of an AffectedCarrierFreq IE is a frequency causing the IDC interference is added, and an interferenceDirection field is configured to a value of nr.
- Option 4: A new cause value (i.e. nrForOtherSIM) indicating that the signal of the first SIM network is causing the IDC interference to the second SIM network is added to an interferenceDirection field.

Upon receiving the information, the first SIM network may release the serving frequency thereof causing the IDC interference.

In scenario 3, the UE may report to the first SIM network that the first SIM network is causing IDC interference to the GPS by using existing MUSIM assistance signaling even though the GPS is used for the other SIM network. That is, the MUSIM assistance signaling is recycled to solve the IDC problem.

For example, to avoid the IDC interference, the UE may request the first SIM network to release the connection or to configure a (a)periodic gap. Here, a new indicator indicating that the signal of the first SIM network is causing the interference to the GPS operating for the other SIM network may be included in the MUSIM assistance to notify the first SIM network of the situation. Upon receiving the information, the first SIM network may release the serving frequency thereof causing the IDC interference, or may reconfigure the predetermined (a)periodic gap.

In scenario 4, the UE may report to the first SIM network that the signal of the first SIM network is causing IDC interference to the second SIM network by using MUSIM assistance signaling. That is, the MUSIM assistance signaling is recycled to solve the IDC problem.

For example, to avoid the IDC interference, the UE may request the first SIM network to release the connection or to configure a (a)periodic gap. Here, a new indicator indicating that the signal of the first SIM network is causing the interference to the other SIM network may be included in the MUSIM assistance to notify the first SIM network of the situation. Alternatively, frequency information (e.g., an ARFCN-ValueNR or ARFCN-ValueEUTRA list) about a victim SIM may be added to an MUSIM-Assistance IE. Frequency range information about the victim SIM affected by the IDC interference may be added. The frequency range may be indicated by start frequency/frequency band, center frequency/frequency band, or start frequency/end frequency information. PLMN information about the victim SIM may also be included in the MUSIM-Assistance IE. Upon receiving the information, the first SIM network may release the serving frequency thereof causing the IDC interference, or may reconfigure the predetermined (a)periodic gap.

In scenario 5, the UE reports to the second SIM network that the signal of the first SIM network is causing IDC interference to the GPS supporting the second SIM network by using IDC assistance signaling. Since the first SIM network, not the second SIM network, causes the IDC interference to the GPS, the operation of the second SIM network based on the IDC assistance information may be very limited. However, through the information, the second SIM network may at least identify the reason why location information via the preset GPS is not properly reported, and may release the unnecessary configuration of the GPS. The following options may be considered for the report.
- Option 1: A victimSystemType field is configured to gps, and frequency information about an attacker SIM (i.e., the first SIM network) is included in an AffectedCarrierFreqComb IE. Here, a new indicator indicating that a frequency indicated by carrierFreq of the AffectedCarrierFreqComb IE is a frequency causing the IDC interference is added.
- Option 2: Frequency information (e.g., an ARFCN-ValueNR or ARFCN-ValueEUTRA list) about an attacker SIM is newly added to an IDC-Assistance IE. Frequency range information about the attacker SIM causing the IDC interference may be added. The frequency range may be indicated by start frequency/frequency band, center frequency/frequency band, or start frequency/end frequency information. PLMN information about the attacker SIM may also be included in the IDC-Assistance IE.
- Option 3: A new indicator indicating that a frequency indicated by carrierFreq of an AffectedCarrierFreq IE is a frequency of the other SIM network is added, and an interferenceDirection field is configured to a value of other.

In scenario 6, the UE reports to the second SIM network that the signal of the first SIM network is causing IDC interference to the second SIM network by using IDC assistance signaling. The following options may be considered for the report.
- Option 1: A new cause value (i.e., nr) for indicating that the signal of the first SIM network is causing the IDC interference to the second SIM network is added to a victimSystemType field. Frequency information about a victim SIM (i.e., the second SIM network) is included in an AffectedCarrierFreqComb IE.
- Option 2: Frequency information (e.g., an ARFCN-ValueNR or ARFCN-ValueEUTRA list) about an attacker SIM is newly added to an IDC-Assistance IE. Frequency range information about the attacker SIM causing the IDC interference may also be added. The frequency range may be indicated by start frequency/frequency band, center frequency/frequency band, or start frequency/end frequency information. PLMN information about the attacker SIM may also be included in the IDC-Assistance IE.
- Option 3: A new indicator indicating that a frequency indicated by carrierFreq of an AffectedCarrierFreq IE is a frequency receiving the IDC interference from the other SIM network is added, and an interferenceDirection field is configured to a value of nr.
- Option 4: A new cause value (i.e., nrForThisSIM) for indicating that the signal of the first SIM network is causing the IDC interference to the second SIM network is added to an interferenceDirection field. Here, frequency information about a victim SIM (i.e., the second SIM network) is included in carrierFreq of an AffectedCarrierFreq IE.

Upon receiving the information, the second SIM network may release a serving frequency thereof receiving the IDC interference.

In scenario 7, the UE reports to the second SIM network that the signal of the first SIM network is causing IDC interference to the GPS supporting the second SIM network by using MUSIM assistance signaling. Since the first SIM network, not the second SIM network, causes the IDC interference to the GPS, the operation of the second SIM network based on the MUSIM assistance information may be very limited. However, through the information, the second SIM network may at least identify the reason why location information via the preset GPS is not properly reported, and may release the unnecessary configuration of the GPS. To this end, a new indicator indicating that the signal of the first SIM network is causing the IDC interference to the GPS supporting the second SIM network may be included in the MUSIM assistance to notify the second SIM network of the situation. Alternatively, frequency information (e.g., an ARFCN-ValueNR or ARFCN-ValueEUTRA list) about an attacker SIM may be added to an MUSIM-Assistance IE. Frequency range information about the attacker SIM affected by the IDC interference may be added. The frequency range may be indicated by start frequency/frequency band, center frequency/frequency band, or start frequency/end frequency information. PLMN information about the attacker SIM may also be included in the MUSIM-Assistance IE.

In scenario 8, the UE may report to the second SIM network that the signal of the first SIM network is causing IDC interference to the second SIM network by using MUSIM assistance signaling. That is, the MUSIM assistance signaling is recycled to solve the IDC problem.

For example, to avoid the IDC interference, the UE may request the second SIM network to release the connection or to configure a (a)periodic gap. Here, a new indicator indicating that the signal of the other SIM network is causing the interference may be included in the MUSIM assistance to notify the second SIM network of the situation. Alternatively, frequency information (e.g., an ARFCN-ValueNR or ARFCN-ValueEUTRA list) about a victim SIM may be added to an MUSIM-Assistance IE. Frequency range information about the victim SIM affected by the IDC interference may also be added. The frequency range may be indicated by start frequency/frequency band, center frequency/frequency band, or start frequency/end frequency information. PLMN information about the victim SIM may also be included in the MUSIM-Assistance IE. Upon receiving the information, the second SIM network may release the serving frequency thereof receiving the IDC interference, or may reconfigure the predetermined (a)periodic gap.

In another embodiment, when the uplink signal transmitted by the RF chain corresponding to the first SIM network causes IDC interference to the downlink of the RF chain corresponding to the second SIM network or the downlink of the other wireless system (e.g., the GPS) operating to support the second SIM network, the UE may report an indicator indicating that there is a problem in hardware sharing due to the IDC interference to the first or second SIM network.

FIG. 1h is a flowchart of the operation of a UE illustrating a process for solving an IDC problem of a UE simultaneously communicating with a plurality of SIMs according to an embodiment of the disclosure.

In operation 1h-05, the UE supports a multi-SIM function, and is in a mode of being connected with two SIM networks at the same time. The UE may assign one RF chain to each network to be connected to a plurality of SIM networks.

In operation 1h-10, the UE may report capability information about the UE to each SIM network. The capability information may include an indicator indicating whether the UE supports simultaneous data transmissions and receptions with the plurality of SIM networks in a MUSIM environment and an indicator indicating whether the UE supports is able to report an IDC problem via IDC assistance or MUSIM assistance when the IDC problem occurs between the RF chains corresponding to the respective SIM networks in the MUSIM environment.

In operation 1h-15, the UE may receive an RRCReconfiguration message from each SIM network. An OtherConfig IE of the RRC message may include configuration information of idc-AssistanceConfig or musim-AssistanceConfig. Each of the configuration information may include a corresponding prohibit timer to prevent frequent transmission of report signaling. In addition, each of the configuration information may include an indicator indicating whether the UE is able to report an IDC problem when the IDC problem occurs between the RF chains corresponding to the respective SIM networks in the MUSIM environment.

A CandidateServingFreqListNR IE is information included in the idc-AssistanceConfig configuration information, and is used to indicate frequency information for reporting the IDC problem. The IE generally includes a current serving frequency or a candidate serving frequency (which may be used as a future serving frequency). Therefore, when a first SIM network configures an IDC report for a specific UE, the first SIM network will not include a frequency operated by another SIM network in the IE. That is, when IDC interference occurs between the RF chains corresponding to the SIM networks, if a frequency causing or receiving the IDC interference is the frequency of the other SIM network, the frequency is not be reported to the network. Therefore, in the embodiment, when IDC interference occurs between the RF chains corresponding to the SIM networks, a frequency not included in the CandidateServingFreqListNR IE is allowed to be reported to the network.

In operation 1h-20, the UE may recognize that IDC interference occurs between the RF chains corresponding to the SIM networks.

In operation 1h-25, the UE may determine a SIM network to which the UE reports IDC assistance or MUSIM assistance information among the SIM networks involved in the IDC interference according to a predetermined rule. For example, when the UE is receiving a more important service (e.g., a voice call service) from one of the two SIM networks, the UE may transmit the IDC assistance or MUSIM assistance information to a SIM network providing a relatively less important service. The reason for reporting the information is to request the SIM network receiving the information to change an existing configuration in order to solve the IDC problem. Therefore, reporting the information to the SIM network providing the relatively less important service is a method for maintaining the quality and continuity of the important service. The UE may also report the IDC assistance or MUSIM assistance information to all SIM networks involved in the IDC interference. When the interference is detected, the UE may have only one of idc-AssistanceConfig and musim-AssistanceConfig configured. In this case, the UE needs to report the configured assistance information.

In operation 1h-30, when determining to report predetermined assistance information to the first SIM network, the UE may set the proposed information related to the IDC problem.

In operation 1h-35, the UE may report a UEAssistanceInformation message including the assistance information to the first SIM network.

In operation 1h-40, when determining to report the assistance information to a second SIM network, the UE may set the proposed information related to the IDC problem.

In operation 1h-45, the UE may report a UEAssistanceInformation message including the assistance information to the second SIM network.

FIG. 1i is a flowchart of the operation of a base station illustrating a process for solving an IDC problem of a UE simultaneously communicating with a plurality of SIMs according to an embodiment of the disclosure.

In operation 1i-05, the base station may receive capability information about a UE from the UE. The capability information may include an indicator indicating whether the UE supports simultaneous data transmissions and receptions with a plurality of SIM networks in a MUSIM environment and an indicator indicating whether the UE supports is able to report an IDC problem via IDC assistance or MUSIM assistance when the IDC problem occurs between RF chains corresponding to the respective SIM networks in the MUSIM environment.

In operation 1i-10, the base station may include configuration information of ide-AssistanceConfig or musim-AssistanceConfig in an OtherConfig IE of the RRC message. Each of the configuration information may include a corresponding prohibit timer to prevent frequent transmission of report signaling. In addition, each of the configuration information may include an indicator indicating whether the UE is able to report an IDC problem when the IDC problem occurs between the RF chains corresponding to the respective SIM networks in the MUSIM environment.

In operation 1i-15, the base station may receive a UEAssistanceInformation message including IDC assistance or MUSIM assistance information indicating an IDC problem that occurs between the RF chains corresponding to the respective SIM networks from the UE.

In operation 1i-20, the base station may recognize that the IDC problem is occurring with another SIM network through the received information.

In operation 1i-25, the base station may configure reconfiguration information to avoid the IDC interference. For example, the base station may release a frequency affected by or causing the IDC interference, and may reconfigure a new serving frequency for the UE. Alternatively, the base station may configure a (a)periodic gap for the UE to avoid or alleviate the effect of the IDC interference. During the gap, the UE temporarily suspends data transmission and reception to eliminate the IDC interference. Furthermore, the base station may configure a disconnected mode from the UE.

In operation 1i-30, the base station may transmit the configured reconfiguration information to the UE.

FIG. 1j is a block diagram illustrating an internal structure of a UE according to an embodiment of the disclosure.

Referring to the drawing, the UE may include a radio frequency (RF) processor 1j-10, a baseband processor 1j-20, a storage 1j-30, and a controller 1j-40.

The RF processor 1j-10 may perform functions for transmitting/receiving signals through a radio channel, such as signal band conversion and amplification. That is, the RF processor 1j-10 may up-convert a baseband signal provided from the baseband processor 1j-20 to an RF band signal, may transmit the same through an antenna, and may down-convert an RF band signal received through the antenna to a baseband signal.

For example, the RF processor 1j-10 may include a transmission filter, a reception filter, an amplifier, a mixer, an oscillator, a digital-to-analog converter (DAC), an analog-to-digital converter (ADC), and the like. Although only one antenna is illustrated in the drawing, the UE may include multiple antennas. In addition, the RF processor 1j-10 may include multiple RF chains. Furthermore, the RF processor 1j-10 may perform beamforming. For the beamforming, the RF processor 1j-10 may adjust the phase and magnitude of signals transmitted/received through multiple antennas or antenna elements, respectively. In addition, the RF processor may perform MIMO, and may receive multiple layers when performing a MIMO operation.

The baseband processor 1j-20 may perform functions of conversion between baseband signals and bitstrings according to the system's physical layer specifications. For example, during data transmission, the baseband processor 1j-20 may encode and modulate a transmitted bitstring to generate complex symbols. In addition, during data reception, the baseband processor 1j-20 may demodulate and decode a baseband signal provided from the RF processor 1j-10 to restore a received bitstring.

For example, when following the orthogonal frequency division multiplexing (OFDM) scheme, during data transmission, the baseband processor 10-20 may encode and modulate a transmitted bitstring to generate complex symbols, may map the complex symbols to subcarriers, and may configure OFDM symbols through inverse fast Fourier transform (IFFT) operation and cyclic prefix (CP) insertion. In addition, during data reception, the baseband processor 1j-20 may split a baseband signal provided from the RF processor 1j-10 at the OFDM symbol level, may restore signals mapped to subcarriers through a fast Fourier transform (FFT) operation, and may restore a received bitstring through demodulation and decoding.

The baseband processor 1j-20 and the RF processor 1j-10 may transmit and receive signals as described above. Therefore, the baseband processor 1j-20 and the RF processor 1j-10 may be referred to as a transmitter, a receiver, a transceiver, or a communication unit. Furthermore, at least one of the baseband processor 1j-20 and the RF processor 1j-10 may include multiple communication modules to support multiple different radio access technologies. In addition, at least one of the baseband processor 1j-20 and the RF processor 1j-10 may include different communication modules to process signals in different frequency bands. For example, the different radio access technologies may include wireless LANs (for example, IEEE 802.11), cellular networks (for example, LTE), and the like. In addition, the different frequency bands may include super high frequency (SHF) (e.g., 2 NRHz) bands and millimeter wave (mmWave) (e.g., 60GHz) bands.

The storage unit 1j-30 may store basic programs, application programs, and data, such as configuration information, for operation of the main base station. Particularly, the storage 1j-30 may store information regarding a second access node configured to perform wireless communication by using a second radio access technology. In addition, the storage 1j-30 may provide the stored data at the request of the controller 1j-40.

The controller 1j-40 controls the overall operation of the UE. For example, the controller 1j-40 may transmit/receive signals through the baseband processor 1j-20 and the RF processor 1j-10. In addition, the controller 1j-40 records data in the storage 1j-30 and reads the data from the storage 1j-30. To this end, the controller 1j-40 may include at least one processor. For example, the controller 1j-40 may include a communication processor (CP) configured to perform control for communication, and an application processor (AP) configured to control upper layers such as application programs.

FIG. 1k is a block diagram illustrating a structure of a base station according to an embodiment of the disclosure.

As illustrated in the drawing, the base station may include an RF processor 1k-10, a baseband processor 1k-20, a backhaul communication unit 1k-30, a storage 1k-40, and a controller 1k-50.

The RF processor 1k-10 may perform functions for transmitting/receiving signals through a radio channel, such as signal band conversion and amplification. That is, the RF processor 1k-10 may up-convert a baseband signal provided from the baseband processor 1k-20 to an RF band signal, may transmit the same through an antenna, and may down-convert an RF band signal received through the antenna to a baseband signal. For example, the RF processor 1k-10 may include a transmission filter, a reception filter, an amplifier, a mixer, an oscillator, a DAC, and an ADC. Although only one antenna is illustrated in the drawing, the first access node may include multiple antennas. In addition, the RF processor 1k-10 may include multiple RF chains. Furthermore, the RF processor 1k-10 may perform beamforming. For the beamforming, the RF processor 1k-10 may adjust the phase and magnitude of signals transmitted/received through multiple antennas or antenna elements, respectively. The RF processor may transmit one or more layers to perform a downward MIMO operation.

The baseband processor 1k-20 may perform functions of conversion between baseband signals and bitstrings according to the physical layer specifications of first radio access technology. For example, during data transmission, the baseband processor 1k-20 may encode and modulate a transmitted bitstring to generate complex symbols. In addition, during data reception, the baseband processor 1k-20 may demodulate and decode a baseband signal provided from the RF processor 1k-10 to restore a received bitstring.

For example, when following the OFDM scheme, during data transmission, the baseband processor 1k-20 may encode and modulate a transmitted bitstring to generate complex symbols, may map the complex symbols to subcarriers, and may configure OFDM symbols through IFFT operation and CP insertion.

In addition, during data reception, the baseband processor 1k-20 may split a baseband signal provided from the RF processor 1k-10 at the OFDM symbol level, may restore signals mapped to subcarriers through FFT operation, and may restore a received bitstring through demodulation and decoding.

The baseband processor 1k-20 and the RF processor 1k-10 transmit and receive signals as described above. Therefore, the baseband processor 1k-20 and the RF processor 1k-10 may be referred to as a transmitter, a receiver, a transceiver, or a communication unit.

The backhaul communication unit 1k-30 may provide an interface for communicating with other nodes in the network. That is, the backhaul communication unit 1k-30 converts bitstrings transmitted from the main base station to other nodes, for example, an auxiliary base station, a core network, etc., into physical signals, and converts physical signals received from the other nodes into bitstrings.

The storage 1k-40 may store basic programs, application programs, and data, such as configuration information, for operation of the main base station. Particularly, the storage 1k-40 may store information regarding a bearer allocated to a connected UE, a measurement result reported from the connected UE, and the like. In addition, the storage 1k-40 may store information serving as a reference to determine whether to provide multi-connection to a UE or to suspend the same. In addition, the storage 1k-40 may provide the stored data at the request of the controller 1k-50.

The controller 1k-50 controls the overall operation of the main base station. For example, the controller 1k-50 transmits/receives signals through the baseband processor 1k-20 and the RF processor 1k-10 or through the backhaul communication unit 1k-30. In addition, the controller 1k-50 records data in the storage 1k-40 and reads the data from the storage 1k-40. To this end, the controller 1k-50 may include at least one processor.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. It will be apparent to those skilled in the art that, in addition to the embodiments set forth herein, other variants based on the technical idea of the disclosure may be implemented.

## Claims

1. A method performed by a terminal supporting a plurality of SIMs (multi-universal subscriber identity modules: MUIM) in a wireless communication system, the method comprising:
receiving configuration to transmit MUSIM-related UE assistance information from a first network related to a first SIM;
identifying a frequency band affected by a second network related to a second SIM; and
transmitting a UE assistance information message comprising information about the frequency band affected by the second network to the first network related to the first SIM.

2. The method of claim 1, wherein the information about the frequency band comprises a list of the frequency band affected by the second network.

3. The method of claim 1, wherein the receiving of the configuration to transmit the MUSIM-related UE assistance information comprises receiving a radio resource control (RRC) message comprising a prohibit timer for an MUSIM operation, and
wherein the prohibit timer for the MUSIM operation is related to limitation of a terminal capability.

4. The method of claim 1, wherein the terminal is in a radio resource control (RRC)-connected state with the first network and the second network,
wherein the first network and the second network are a new radio (NR) or evolved-universal mobile telecommunications system (UMTS) terrestrial radio access (E-UTRA), and
wherein the first SIM and the second SIM are different.

5. A method performed by a first network related to a first SIM in a wireless communication system, the method comprising:
performing configuration to transmit MUSIM-related UE assistance information to a terminal supporting a plurality of SIMs (multi-universal subscriber identity module: MUIM); and
receiving a UE assistance information message comprising information about a frequency band affected by a second network related to a second SIM from the terminal.

6. The method of claim 4, wherein the information about the frequency band affected by the second network related to the second SIM comprises a list of the frequency band affected by the second network.

7. The method of claim 4, wherein the performing of the configuration to transmit the MUSIM-related UE assistance information comprises transmitting a radio resource control (RRC) message comprising a prohibit timer for an MUSIM operation, and
wherein the prohibit timer for the MUSIM operation is related to limitation of a terminal capability.

8. The method of claim 5, wherein the terminal is in a radio resource control (RRC)-connected state with the first network and the second network,
wherein the first network and the second network are a new radio (NR) or evolved-universal mobile telecommunications system (UMTS) terrestrial radio access (E-UTRA), and
wherein the first SIM and the second SIM are different.

9. A terminal supporting a plurality of SIMs (multi-universal subscriber identity modules: MUIM) in a wireless communication system, the terminal comprising:
a transceiver configured to transmit and receive a signal; and
a controller,
wherein the controller is configured to:
transmit MUSIM-related UE assistance information from a first network related to a first SIM;
identify a frequency band affected by a second network related to a second SIM; and
transmit a UE assistance information message comprising information about the frequency band affected by the second network to the first network related to the first SIM.

10. The terminal of claim 9, wherein the information about the frequency band comprises a list of the frequency band affected by the second network.

11. The terminal of claim 9, wherein the controller is configured to receive a radio resource control (RRC) message comprising a prohibit timer for an MUSIM operation, and
wherein the prohibit timer for the MUSIM operation is related to limitation of a terminal capability.

12. The terminal of claim 9, wherein the terminal is in a radio resource control (RRC)-connected state with the first network and the second network,
wherein the first network and the second network are a new radio (NR) or evolved-universal mobile telecommunications system (UMTS) terrestrial radio access (E-UTRA), and
wherein the first SIM and the second SIM are different.

13. A first network related to a first SIM in a wireless communication system, the first network comprising:
a transceiver configured to transmit and receive a signal; and
a controller,
wherein the controller is configured to:
perform configuration to transmit MUSIM-related UE assistance information to a terminal supporting a plurality of SIMs (multi-universal subscriber identity module: MUIM); and
receive a UE assistance information message comprising information about a frequency band affected by a second network related to a second SIM from the terminal.

14. The first network of claim 13, wherein the information about the frequency band affected by the second network related to the second SIM comprises a list of the frequency band affected by the second network.

15. The first network of claim 13, wherein the controller is configured to transmit a radio resource control (RRC) message comprising a prohibit timer for an MUSIM operation,
wherein the prohibit timer for the MUSIM operation is related to limitation of a terminal capability,
wherein the terminal is in a radio resource control (RRC)-connected state with the first network and the second network,
wherein the first network and the second network are a new radio (NR) or evolved-universal mobile telecommunications system (UMTS) terrestrial radio access (E-UTRA), and
wherein the first SIM and the second SIM are different.
